(19) Europäisches Patentamt
European Patent Office
Office européen des brevets

(11) **EP 1 605 360 B1**

(12) **EUROPEAN PATENT SPECIFICATION**

(45) Date of publication and mention
of the grant of the patent:
**17.02.2010 Bulletin 2010/07**

(51) Int Cl.:
***G06F 12/08*** *(2006.01)*

(21) Application number: **04013507.1**

(22) Date of filing: **08.06.2004**

(54) **Cache coherency maintenance for DMA, task termination and synchronisation operations**

Aufrechterhaltung der Cachespeicherkoherenz zum direkten Zugriff (DMA), Abschluss einer Aufgabe, zur Synchronisierung

Maintien de la cohérence d'une antémémoire pour des opérations d'accès direct à la mémoire (DMA), terminaison de tâche et synchronisation

(84) Designated Contracting States:
**AT BE BG CH CY CZ DE DK EE ES FI FR GB GR HU IE IT LI LU MC NL PL PT RO SE SI SK TR**

(43) Date of publication of application:
**14.12.2005 Bulletin 2005/50**

(73) Proprietor: **FREESCALE SEMICONDUCTORS, INC.**
**Austin, Texas 78735 (US)**

(72) Inventors:
• **Peled, Itay**
**Beer-sheve 84807 (IL)**
• **Anschel, Moshe**
**Kafr-Sabe, 44418 (IL)**
• **Efrat (Yacov), Jacob**
**Kfar-Saba (IL)**
• **Eldar, Alon**
**Ra'anana, 43354 (IL)**

(74) Representative: **Ferro, Frodo Nunes et al**
**Freescale Semiconductor Inc**
**C/o Impetus IP Ltd**
**Grove House**
**Lutyens Close**
**Chineham Court**
**Basingstoke, RG24 8AG (GB)**

(56) References cited:
**EP-A- 1 030 243      EP-A- 1 182 563**
**US-A- 4 713 755      US-A1- 2002 065 980**

**Description**

**Field of the Invention**

This invention relates to a memory cache control arrangement and a method of performing a coherency operation therefor.

**Background of the Invention**

Digital data processing system are used in many applications including for example data processing systems, consumer electronincs, computers, cars etc. For example, personal computers (PCs) use complex digital processing functionality to provide a platform for a wide variety of user applications.

Digital data processing systems typically comprise input/output functionality, instruction and data memory and one or more data processors, such as a microcontroller, a microprocessor or a digital signal processor.

An important parameter of the performance of a processing system is the memory performance. For optimum performance, it is desired that the memory is large, fast and preferably cheap. Unfortunately these characteristics tend to be conflicting requirements and a suitable trade-off is required when designing a digital system.

In order to improve memory performance of processing systems, complex memory structures which seek to exploit the individual advantages of different types of memory have been developed. In particular, it has become common to use fast cache memory in association with larger, slower and cheaper main memory.

For example, in a PC the memory is organised in a memory hierarchy comprising memory of typically different size and speed. Thus a PC may typically comprise a large, low cost but slow main memory and in addition have one or more cache memory levels comprising relatively small and expensive but fast memory. During operation data from the main memory is dynamically copied into the cache memory to allow fast read cycles. Similarly, data may be written to the cache memory rather than the main memory thereby allowing for fast write cycles.

Thus, the cache memory is dynamically associated with different memory locations of the main memory and it is clear that the interface and interaction between the main memory and the cache memory is critical for acceptable performance. Accordingly significant research into cache operation has been carried out and various methods and algorithms for controlling when data is written to or read from the cache memory rather than the main memory as well as when data is transferred between the cache memory and the main memory have been developed.

Typically, whenever a processor performs a read operation, the cache memory system first checks if the corresponding main memory address is currently associated with the cache. If the cache memory contains a valid data value for the main memory address, this data value is put on the data bus of the system by the cache and the read cycle executes without any wait cycles. However, if the cache memory does not contain a valid data value for the main memory address, a main memory read cycle is executed and the data is retrieved from the main memory. Typically the main memory read cycle includes one or more wait states thereby slowing down the process.

A memory operation where the processor can receive the data from the cache memory is typically referred to as a cache hit and a memory operation where the processor cannot receive the data from the cache memory is typically referred to as a cache miss. Typically, a cache miss does not only result in the processor retrieving data from the main memory but also results in a number of data transfers between the main memory and the cache. For example, if a given address is accessed resulting in a cache miss, the subsequent memory locations may be transferred to the cache memory. As processors frequently access consecutive memory locations, the probability of the cache memory comprising the desired data thereby typically increases.

Cache memory systems are typically divided into cache lines which correspond to the resolution of a cache memory. In cache systems known as set-associative cache systems, a number of cache lines are grouped together in different sets wherein each set corresponds to a fixed mapping to the lower data bits of the main memory addresses. The extreme case of each cache line forming a set is known as a fully associative cache and this allows each cache line to be mapped to any main memory location. The other extreme where all cache lines belong to a single set is known as a direct mapped cache and results in each main memory address being mapped to one specific cache line.

In order to keep track of which main memory address (if any) each cache line is associated with, the cache memory system typically comprises a data array which for each cache line holds data indicating the current mapping between that line and the main memory. In particular, the data array typically comprises higher data bits of the associated main memory address. This information is typically known as a tag and the data array is known as a tag-array.

It is clear that the control of the cache memory is highly critical and in particular that it is essential to manage the correspondance between the main memory and the cache memory. For example, if data is modified in the main memory without corresponding data of the cache memory being updated or designated as invalid data, disastrous consequences may result. Similarly, if data which has been written to the cache memory is not transferred to the main memory before it is overwritten in the cache or prior to the corresponding locations of the main memory being accessed directly, the data discrepancy may result in errors. Thus the reliability of the processing system is highly dependent on the control of the cache. Accordingly, coherency operations are performed at suitable instants to eliminate or reduce the probability that a discrepancy between cache memory and main memory does not result in undesired effects.

For example, a Direct Memory Access (DMA) module may be able to access the main memory directly. The DMA may for example be part of a hard disk interface and be used for transferring data from the main memory to the hard disk during a hard disk write operation. Before a DMA operation can be performed, it is important that all data written to the cache memory has been transferred to the main memory. Accordingly, prior to a hard disk write operation, the processor system preferably performs a coherency operation where all data that has been written to the cache memory but not the main memory is transferred to the main memory. The coherency operation is probably executed with as little complexity and time consumption as possible in order to free up the system for normal operation and to reduce the computational loading of the system.

However, generally such coherency operations are complex, time consuming, power consuming and/or require complex hardware thereby increasing cost. For example, if a given address block of the main memory is to be transferred to the hard disk, conventional approaches comprise stepping trough each location of the main memory and checking whether the cache comprises an updated value for this location. As the main memory address block may be very large, this is a very cumbersome process which typically is very time consuming for a software implementation and has a high complexity requirement for a hardware implementation.

In order to speed up coherency processes, dedicated hardware may be included to facilitate or perform the coherency operations. However, such hardware significantly increases cost, is complex to develop and implement. Specifically, additional on-chip coherency requires additional area on the chip as well as increases the power consumption.

An example of a cache coherency operation is described in European Patent Convention application EP 1182566A1. The document describes a cache maintenance operation based on defining a start and end address of a main memory block and consequently stepping through all addresses in the range by the resolution of the cache line. For each step, the main memory address is compared to all values stored in the cache memory tag array and if a match is detected a coherency operation is performed. However, this results in a very time consuming process. Furthermore, although the process time may be reduced by introducing a parallel hardware comparison between the main memory address and the tag array, this increases the hardware complexity and thus increases cost.

Additionally, the duration of the coherency operation depends on the size of the memory block being processed. Thus, as the size of the memory range increases, an increasing number of addresses must be stepped through thereby increasing the duration. This is a significant disadvantage in particular for real time systems wherein the uncertainty of the process duration significantly complicates the real time management of different processes.

Hence, an improved memory cache control arrangement, processing system and method of performing a coherency operation on a memory cache would be advantageous and in particular a system allowing increased flexibility, reduced complexity, reduced time consumption, reduced cost, increased reliability and/or improved performance would be advantageous.

### Statement of Invention

The present invention provides a memory cache control arrangement, a memory cache system, a processing system and a storage medium as described in the accompanying claims.

Accordingly, the present invention seeks to preferably mitigate, alleviate or eliminate one or more of the above-mentioned disadvantages, singly or in any combination.

### Brief Description of the Drawings

Exemplary embodiments of the present invention will now be described, with reference to the accompanying drawings, in which:

FIG. 1 is an illustration of a processor system comprising a cache memory system in accordance with an embodiment of the invention;

FIG. 2 is an illustration of a structure of a cache memory;

FIG. 3 illustrates a cache memory system in accordance with an embodiment of the invention;

FIG. 4 illustrates an example of a tag array for a cache memory system in accordance with an embodiment of the invention; and

FIG. 5 illustrates a flow chart of a method of performing a cache memory coherency operation in accordance with an embodiment of the invention.

## Description of Preferred Embodiments

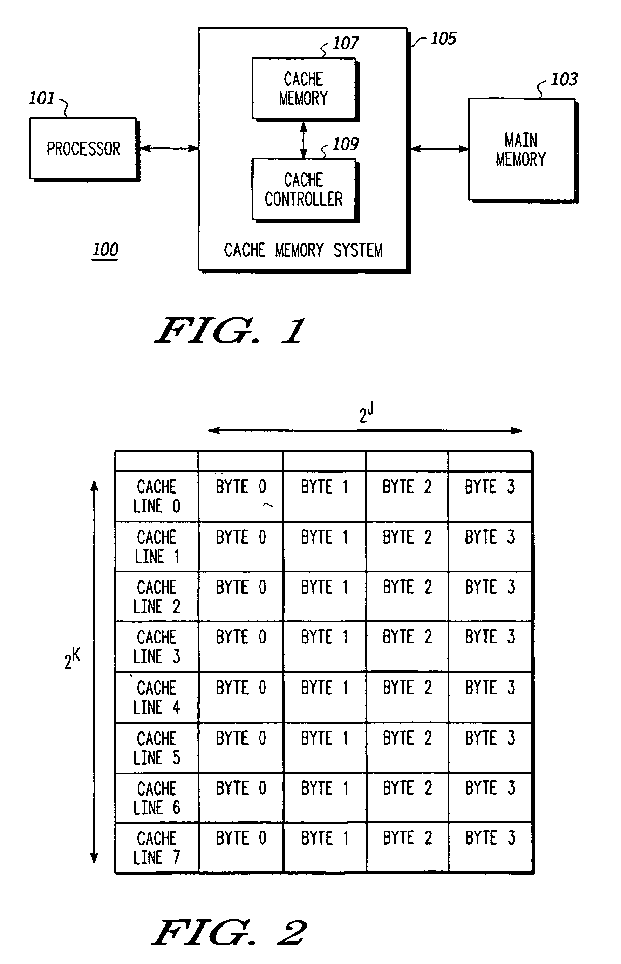

FIG. 1 is an illustration of a processor system comprising a cache memory system in accordance with an embodiment of the invention.

A processing system 100 comprises a processor 101 and a main memory 103 which stores instructions and data used by the processor 101 in running applications. The processor 101 may for example be a microprocessor or a digital signal processor and the main memory is in the embodiment dynamic RAM (Random Access Memory). The main memory 103 is relatively large and may for example be of the order of 1 Gbyte. The processor 101 and the main memory 103 are coupled to a cache memory system 105 which together with the main memory 103 forms a hierarchical memory arrangement for the processing system 100.

The cache memory system 105 comprises a cache memory 107 and a cache controller 109. The cache memory 107 is in the described embodiment a static RAM which is significantly faster than the dynamic RAM used by the main memory 103. However the cache memory 107 is substantially smaller than the main memory 103 and may for example be in the order of 256 kBytes. The cache controller 109 controls the operation of the hierarchical memory system and in particular controls the operation of the cache memory system 105 and the access of the main memory 103.

In operation, the tasks run by the processor 101 access memory by addressing memory locations in the address space of the main memory 103. These memory accesses may be served by the cache memory system 105 or may result in memory accesses to the main memory 103. In particular for read operations, the cache controller 109 determines if the cache memory 107 contains valid data for the specified main memory address and if so this value is retrieved and fed back to the processor 101. In particular, if a cache match is detected, the cache memory system 105 puts the appropriate data on the data bus. If the cache controller 109 determines that the cache memory 107 does not contain valid data for the specified main memory address, it retrieves the appropriate data from main memory 103. In particular, the cache controller 109 may cause the main memory 103 to put the appropriate data on the data bus.

When a cache miss occurs, the cache controller 109 furthermore loads the data retrieved from the main memory 103 into the cache memory 107 as the same main memory address is often accessed again shortly after a previous access. Due to the slow response times of the main memory 103, a wait signal is typically asserted thereby introducing additional wait states in the read process. Thus, a cache hit will result in a faster memory access than for a cache miss. Furthermore, as the probability of memory locations near the current memory location being accessed increases, the cache controller 109 typically transfers data from the memory locations adjacent to the memory location.

It will be appreciated that although the embodiment is described with reference to a cache controller 109 as a single isolated functional module, this is merely for brevity and clarity of the description and that the cache controller 109 may be implemented in any suitable way. In particular, the cache controller 109 may be implemented in hardware, software, firmware or a combination thereof. In addition, the cache controller 109 may e.g. be integrated with the cache memory 107, the processor 101 or be a separate module. In particular, all or part of the cache controller 109 may be fully or partly implemented in software running on the processor 101 or in a separate processor or memory management unit.

FIG. 2 is an illustration of a structure of a cache memory 107. In the example, the cache memory 107 is a direct mapped cache memory comprising $2^k$ cache lines. In the example, each cache line comprises 4 data bytes and the resolution of the main memory addressing is one byte. In the example illustrated k=3 and the cache thus comprises 32 bytes. It will be appreciated that practical caches are typically significantly larger. For example, currently cache memory for PCs may typically comprise caches comprising 16 to 32 bytes in each cache line and e.g. 8192 cache lines (i.e. k= 13).

For simplicity the main memory 103 will in the specific example be considered to comprise 1 kbyte corresponding to a 10 bit address space. It will be appreciated that practical main memories typically are much larger and have significantly longer addresses. In the example, a main memory address put on the address bus by the processor 101 may thus be represented by the binary value:

$$b_9, \ b_8, \ b_7, \ b_6, \ b_5, \ b_4, \ b_3, \ b_2, \ b_1, \ b_0$$

In the example, the mapping to the cache memory locations is achieved by a fixed mapping between the address bits and the cache memory location. Thus, in the example $b_1$, $b_0$ determines the byte location within the cache line and $b_4$, $b_3$, $b_2$ determines the cache line address, also known as the index. Thus, an address having $b_1$, $b_0$ = 1,0 and $b_4$, $b_3$, $b_2$ = 1,0,1 will map to memory location $10_b$ of cache line $101_b$ = 5. In the example of a direct mapped cache all main data addresses having $b_1$, $b_0$ = 1,0 and $b_4$, $b_3$, $b_2$ = 1, 0, 1 will map to this cache location.

The cache memory system 105 continuously keeps track of which memory location a given cache line is currently associated with as well as the status of the data held in the cache line. Specifically, the cache controller 109 stores the value of the higher address bits of the main memory address to which the cache line is currently associated. The higher address bits are in this case known as a tag and the cache controller 109 maintains a tag array. The tag array comprises an entry for each cache line with each entry being addressed by the k data bits (the index) used to select the cache line. When a cache line is associated with a new main memory address, the previous tag entry is overwritten by the higher address bits of the new main memory address, i.e. by data bits $b_9, b_8, b_7, b_6, b_5$ in the specific example.

Accordingly, whenever the processor 101 performs a read operation the cache memory system 105 determines if the corresponding value is present in the cache memory by accessing the tag array using the index ($b_4, b_3, b_2$) and comparing the stored tag with the higher address bits of the current address ($b_9, b_8, b_7, b_6, b_5$). If the tag matches the address and a flag indicates that the stored cache data is valid, the data value from the cache memory is put on the data bus resulting in a low latency read operation.

A disadvantage with a direct mapped cache is that each main memory address can only be associated with a single cache line resulting in the probability of conflicts between different main memory addresses increasing and being significant even for a very lightly loaded cache. For example, even if only a single cache line of a large cache memory is associated with a given main memory address, it may be impossible to associate a second main memory address with the cache if this happens to result in the same index as the already associated main memory address.

A fully associative cache provides significantly more flexibility by allowing each cache line to be associated with any main memory address. Specifically, this may be considered equivalent to the index comprising zero bits and the tag comprising all address bits not used to address a location in the cache line.

A set associative cache may be seen as an intermediate between the direct mapped cache and the fully associative cache. In a set-associative cache, a block of cache memory is associated with specific lower address bits as for a direct mapped memory cache. However, in contrast to the direct mapped cache, a plurality of cache blocks are mapped to the same addresses. For example, in the above example, rather than having an index of three bits $b_4, b_3, b_2$ the set associative cache may only use and index of two bits $b_3, b_2$. Thus instead of having a single block of 8 cache lines, the cache memory may now comprise two blocks of 4 cache lines. Accordingly, each main memory may be associated with two different cache lines.

Accordingly, the cache memory system 105 maintains a tag array which has multiple entries for a given index. Thus, when e.g. a read operation occurs, it is necessary to check a plurality of entries in the tag array rather than just a single entry as for the direct mapped cache. However, the number of entries that must be checked is still relatively small and the operation may be facilitated by parallel processing.

Thus in order for the cache memory system 105 to determine if a memory access relates to the cache memory 107 or the main memory 103 it maintains a data array (tag array) which for each cache line comprises data indicating the association to the main memory 103. In addition, the cache memory system 105 keeps track of the status of the data of the cache line. In particular, the cache memory system 105 maintains a status indication which indicates whether new data has been written to a given cache line but not to the main memory. If so there is a discrepancy between the data of the cache memory 107 and the main memory 103 and the data of the cache memory 107 must be written to the main memory 103 before the data is dropped from the cache or the main memory 103 is accessed directly. This indication is referred to as a dirty-bit indication.

Similarly, for read operations a valid indication is used to indicate whether the cache line comprises valid data which has been retrieved from the main memory 103.

It will be appreciated that the status indications may in some embodiments relate to the entire cache line or individual status indications for each location in the cache line may e.g. be maintained.

It will be appreciated that in order to manage the hierarchical memory system coherency (maintenance) operations are required. Such coherency operations include operations that maintain the coherency between the cache memory 107 and the main memory 103 including maintenance write operations, read operations, synchronisation operations etc.

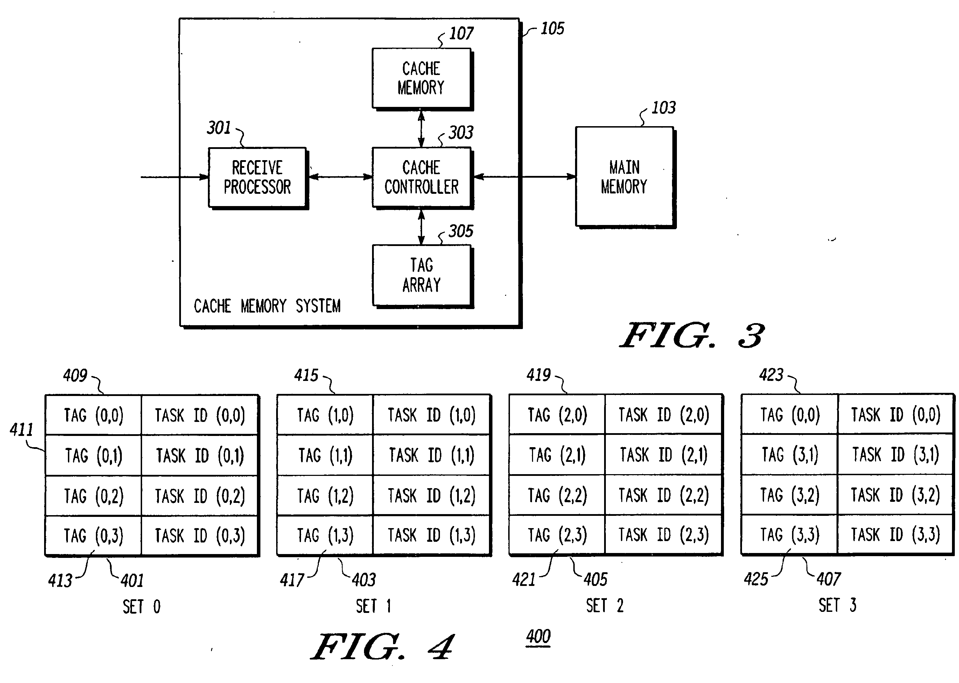

FIG. 3 illustrates the cache memory system 105 in accordance with an embodiment of the invention in more detail. The illustration and description will for brevity and clarity focus on the functionality required for describing the embodiment. In particular the description will focus on the operation of the cache memory system 105 when performing a coherency operation for a direct mapped cache.

In the embodiment, the cache memory system 105 comprises a receive processor 301 which receives instructions from the processor 101. The receive processor 301 is coupled to a control unit 303 which controls the coherency operation of the cache memory system 105. The control unit 303 is further coupled to a tag array 305 as well as the cache memory 107 and the main memory 103.

In accordance with the embodiment of the invention, a coherency operation is initiated by the receive processor 301 receiving an address group indication from the processor 101. The address group indication identifies a group of memory locations in the main memory 103. In the described embodiment, the group consist in a continuous block of memory locations starting at a start address and ending at an end address. However, it will be appreciated that in other embodiments and other applications the address group may correspond to other groups of addresses including disjoint address areas of the main memory 103.

In the described embodiment, the receive processor 301 thus receives an address group indication consisting in a start address and end address. The receive processor 301 further receives an indication that a specific coherency operation is to be performed on the specified address range. For example, the address range may correspond to a given application and the coherency operation may be instigated due to the application terminating. As another example, a DMA operation may be set-up to directly access the specified address range of the main memory 103 and the coherency operation may be instigated to ensure that all data written to the cache for this address range is transferred to the main memory 103 prior to the DMA operation.

The receive processor 301 feeds the start address and the end address to the control unit 303 which stores these values. The control unit 303 then proceeds to perform the coherency process. However, contrary to conventional approaches, the control unit 303 does not step through the main memory addresses of the address range to determine if a cache entry exists for each address of the frequency range. Rather, in the current embodiment, the control unit 303 processes each cache line sequentially by stepping through the tag array 305 and for each entry determining if the cache line is associated with the main memory address range in accordance with a suitable match criterion. If a cache line is found to be associated with the main memory address range, the control unit 303 performs the required coherency operation on the cache line.

For example, the control unit 303 first retrieves the tag stored for a zero index. The corresponding main memory address is determined by combining the tag and the index and the resulting address is compared to the start and end address. If the address falls within the range, the coherency operation is performed on the cache line. For example, if the coherency operation comprises flushing elements of the cache associated with the address range, the control unit 303 causes the data of the cache line to be written to the main memory 103. The control unit 303 then proceeds to retrieve the tag stored for the next index, i.e. for an index of 1 and then repeats the process for this cache line.

Accordingly, the control unit 303 steps through the cache tag array 305 one cache line at a time, and for each line performs the required coherency operation on cache memory 107 if the cache line is associated with the specified memory range.

The described approach provides a number of advantages over the prior art and facilitates or enables a cache memory system which is flexible has low complexity, low cost and high reliability.

Specifically, as the main memory address range is typically much larger than the cache size, fewer comparison cycles need to be considered. In other words, the number of iterations of a loop evaluating a match criterion and conditionally performing a coherency operation is significantly reduced. This will typically reduce the duration of the coherency process significantly thereby reducing the computational load and freeing up the system of other activities.

Furthermore, the duration of the coherency operation depends on the size of the cache rather than the size of the address range. This not only tends to reduce the time required for the coherency process but also results in it being bounded and independent of the address range. This is in particular a significant advantage in real time processing systems and facilitates the time management in such a system.

Additionally, the approach is relatively simple and may be implemented by low complexity hardware, software, firmware or a combination thereof. In particular the functionality of the control unit 303 may at least partially be implemented as a firmware routine of the processor 101.

It will be appreciated that the above description for clarity has not considered an evaluation of the status of the data of the cache line. However, preferably the control unit 303 determines the status of the data of the cache line. Thus the match criterion preferably comprises a consideration of the status of the cache line data and/or the coherency operation is performed in response to the cache line data status. For example, data may only be written to the main memory 103 if the status indication corresponds to a dirty bit status.

It will also be appreciated that although the description specifically considered a cache line evaluation, the process may also separate between different elements of the cache line. For example, the start and/or end address need not coincide with a cache line division but may correspond to a data element within the cache line. Also the status of the data may relate to the individual elements and the coherency operation may consider each individual element. For example, status indications may relate to individual data bytes in a cache line and only the data bytes for which a dirty bit indication is set is written to the main memory 103.

It will also be appreciated that although the control unit 303 preferably steps through the entire cache memory 107 one cache line at a time, it may be advantageous in some embodiments to only step through a subset of the cache lines and this subset may be e.g. predefined or dynamically determined.

The coherency process and operation may be any suitable coherency process and operation.

Specifically, the coherency operation may be an invalidate operation. An invalidate operation may preferably invalidate all cache lines associated with the specified address range. Thus, the control unit 303 may step through the cache and set the status indication to invalid for all cache lines corresponding to the address range. This operation may for example be advantageous in situations where the data was updated in the main memory 103 (by DMA) or situations where the cache holds temporary variables in the cache memory 107 that can be invalidated at the end of a task as they are not needed.

Alternatively or additionally the coherency operation may be a synchronisation operation. A synchronisation operation may synchronise all cache lines associated with the specified address range. Thus, the control unit 303 may step through the cache and write to main memory 103 dirty sections and negate the dirty indication while keeping the valid indication for all cache lines corresponding to the address range.

This operation may for example be advantageous in situations where the memory section is to be read by DMA from main memory 103 while retaining the validity of the data in the cache memory 107 for later use. Another use of the synchronize operation is taking advantage of free cycles to reduce the number of dirty sections in the cache memory 107.

Alternatively or additionally the coherency operation may be a flush operation. A flush operation may flush all cache lines associated with the specified address range. Thus, the control unit 303 may step through the cache and write the data of all cache lines corresponding to the address range and having a dirty bit indication to the main memory 103 and then invalidate the cache line. This operation may for example be advantageous in situations where a memory operation is about to be performed directly on the main memory 103 without the involvement of the cache memory system 105 and when the data is not expected to be used by the processor 101.

In the following, an embodiment of the invention applied to a set-associative memory will be described. In the embodiment, the cache memory 107 is organised into four sets. A main memory address may be associated with any of the sets and thus there are four possible cache lines for each main memory location. The embodiment is compatible with the cache memory system 105 illustrated in FIG. 2 and will be described with reference to this.

In the embodiment, the addressing by the processor employs virtual memory addressing. Specifically, each task running on the processor 101 uses a standard address space which may be mapped to a given physical memory area in the main memory 103 by a memory management unit. Each running task is allocated a task identity which is used by the memory management unit when mapping to the main memory 103. For example, the instructions of a first task may address memory in the range [0, FFFF$_h$]. The memory management unit may allocate this task the task identity 1 and map the range to a physical memory range of [10 000$_h$, 10 FFFF$_h$]. The instructions of a second task may also address memory in the range [0, FFFF$_h$]. The memory management unit may allocate this task the task identity 2 and map the range to a physical memory range of [08 000$_h$, 08 FFFF$_h$].

FIG. 4 illustrates an example of a tag array 400 for a cache memory system 105 in accordance with this embodiment. The tag array comprises four separate data structures 401, 403, 405, 407, each structure corresponding to one of the four sets of the set associative cache. Thus an entry exists in the tag array for each cache line. In the embodiment, each entry comprises a tag corresponding to the higher bits of the virtual address used by the processor 101. In addition, each entry comprises a task identity indicating which task the cache line is associated with. Thus, the entry in the tag array is indicative of the physical main memory address associated with the cache line.

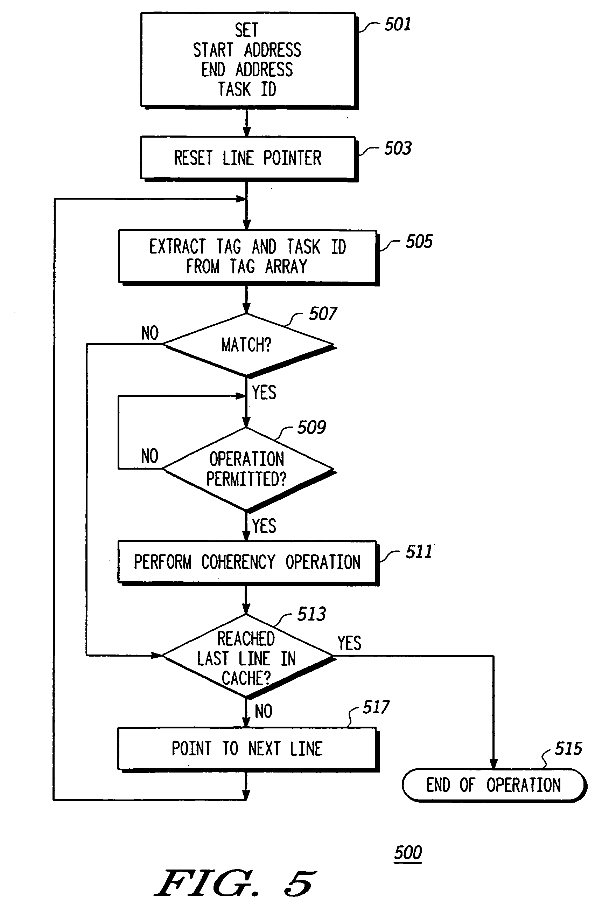

FIG. 5 illustrates a flow chart of a method of performing a cache memory coherency operation in accordance with this embodiment of the invention.

The method initiates in step 501 wherein the control unit 303 is initialised with a start address and an end address defining an address range for which the coherency operation is to be performed. The start address and the end address are specified as virtual addresses used by a given task. For example, for the case wherein a first task addresses memory in the range [0, FFFF$_h$] the start and end addresses are within this range. In order to relate virtual addresses to the physical main memory 103 address range, the control unit 303 is furthermore initialised with task identity (task ID). In the specific example, the coherency operation may relate to the virtual memory interval [1000$_h$, 17FF$_h$] for the first task. Accordingly, the control unit 303 is in step 501 initialised by setting the start address to 1000$_h$, the end address to 17FF$_h$ and the task ID to 1.

The method continues in step 503 where a cache line pointer is set to the first cache line corresponding to the first entry 401 for the first set in the tag array 400.

Step 503 is followed by step 505 wherein the tag and task identity is retrieved from the tag array 400. Thus currently Tag(0,0) and Task ID(0,0) is retrieved from the tag array 400.

Step 503 is followed by step 507 wherein the control unit 303 determines if the cache line corresponding to the first entry 401 is associated with an address for which a coherency operation should be performed. Specifically, the control unit 303 generates an address by combining the retrieved tag with the index for the tag. Thus, a full virtual address is generated for the first entry 401 by combining the address bits from the tag with the address bits of the index.

The generated address is compared to the start and end address and the control unit 303 determines if the retrieved Task ID matches the specified task ID. Thus, it is determined if a task ID of 1 is stored in Task ID(0,0). If the generated address is within the specified address range and the task IDs match, a match is designated and it is thus desirable to perform a coherency operation on the corresponding cache line. In this case the method continues in step 509 and otherwise it continues in step 513.

In step 509 it is determined if it is currently practical to perform the coherency operation. Specifically, the control unit 303 determines if a conflict exists between the coherency operation and another memory operation. The control unit 303 may for example determine if a resource which is shared between the coherency operation and the other memory operation is currently used by the other memory operation. For example, if the cache memory 107 access resources which are shared between the normal cache operation (cache line reallocation) and the coherency operation, a higher priority may be given to the normal cache operation when a conflict exists between the two.

If a conflict is determined to exist in step 509, the control unit 303 in the current embodiment proceeds to inhibit the coherency operation. In particular, the control unit 303 may inhibit the coherency operation by delaying the coherency operation until the other memory operation is terminated. This may be achieved by continuously checking if a conflict exists and only proceeding to the next step when this is not the case.

When no conflict is determined in step 509 the method proceeds to step 511 wherein the control unit 303 performs the desired coherency operation on the corresponding cache line. As previously mentioned, the coherency operation may for example be a flush, invalidate or synchronise operation.

Step 511 is followed by step 513 wherein the control unit 303 determines if it has stepped through the entire cache. If so, the method continues in step 515 wherein the process terminates. Otherwise the method continues in step 517 wherein the pointer is updated to refer to the next cache line. The method then continues in step 505 by processing the next cache line. The next cache line is determined as the subsequent cache line in the set. When the last cache line of a set has been reached, the next cache line is determined as the first cache line of the next set. When the last cache line of the last set has been reached, this is detected in step 513 resulting in the method terminating.

Thus, the method results in the cache lines of each individual set being sequentially stepped through as well as the individual sets also being sequentially stepped through. Thus, in the embodiment all cache lines of the cache are sequentially processed and for each cache line, it is determined if a coherency operation is appropriate and if so the operation is performed.

Specifically, the tag array 400 of FIG. 4 is stepped through by initially evaluating the first entry 409, followed by the next entry 411 of set 0 and so forth until the last entry 413 for set 0 is reached. The method then steps to set 1 by pointing to the first entry 415 of set 1. Similarly the last entry 417 of set 1 is followed by the first entry 419 of set 2, and the last entry 421 of set 2 is followed by the first entry 423 of set 3.

When the last entry 425 of set 3 has been reached the coherency process has been executed.

It will be appreciated that although the described embodiment has described an implementation wherein the steps are executed sequentially in the described order, parallel operations and/or a different order of the steps may equally be applied as suitable. In particular, steps 505, 507, 509, 513, 517, may be performed in parallel to step 511. Hence, while performing the coherency operations for a cache line the controller may evaluate the next cache line.

Preferably, the control unit 303 sets a termination indication when the process terminates in step 515. Specifically, the control unit 303 may cause an interrupt indication to be set which results in an interrupt sequence at the processor. The interrupt indication may be a software interrupt indication or may be a hardware interrupt indication such as setting a signal on an interrupt signal input of the processor 101. This may facilitate management of different tasks and in particular facilitate task time management in real time processing systems.

The above embodiments have focussed on a match being determined in response to a single match criterion based on a specified address range. However, in other embodiments other criteria may be used and/or a plurality of criteria may be used. For example, the address group indication may consist in a task identity and the match criterion may simply determine if each cache line matches that task identity. Thus, a coherency operation may be performed for a given task simply by specifying the corresponding task identity.

Preferably, the control unit 303 is operable to select between a plurality of match criteria and particularly it may be operable to select between different match criteria in response to data received from the processor 101.

For example, if the control unit 303 receives a start address, an end address and a task identity in connection with a coherency process instigation command, it may proceed by using a match criterion that evaluates if the entry in the tag array comprises data matching all three requirements. However, if only a start address and an end address was received in connection with the instigation command, only the stored address tag will be considered by the match criterion. This may allow a simple coherency operation on a given memory area regardless of which task is using the particular area. Furthermore, if the control unit 303 receives only a task identity with the instigation command, the match criterion determines only if the task identity matches. This allows a simple coherency operation for a specific task. Finally, if no specific data is received in connection with the instigation command, the control unit 303 may perform a coherency operation on the entire cache memory 107 regardless of the association between the cache memory 107 and the main memory 103.

It will be appreciated that although the above description is specifically appropriate for a data memory cache the invention may also be applied to for example an instruction memory cache.

It will also be appreciated that the invention is not limited to performing only one comparison per cycle but that a plurality of comparisons may e.g. be performed in parallel.

Whilst the specific and preferred implementations of the embodiments of the present invention are described above, it is clear that one skilled in the art could readily apply variations and modifications of such inventive concepts.

In particular, it will be appreciated that the above description for clarity has described embodiments of the invention with reference to different functional units of the processing system. However, it will be apparent that any suitable distribution of functionality between different functional units may be used without detracting from the invention. Hence, references to specific functional units are only to be seen as references to suitable means for providing the described functionality rather than indicative of a strict logical or physical structure, organization or partitioning. For example, the cache controller may be integrated and intertwined with the processor or may be a part of this.

The invention can be implemented in any suitable form including hardware, software, firmware or any combination of these. However, preferably, the invention is implemented as computer software running on one or more data processors.

**Claims**

1. A memory cache control arrangement for performing a coherency operation on a memory cache (105) comprising:

   means for receiving (301) an address group indication for an address group comprising a plurality of addresses associated with a main memory (103); and **characterized by**:

   processing means (303) for sequentially processing each cache line of a group of cache lines; the processing means (303) comprising:

   match means for determining if a cache line is associated with an address of the address group by evaluating a match criterion;
   coherency means for performing a coherency operation on the cache line if the match criterion is met; and
   means for determining if a conflict exists between the coherency operation and another memory operation and wherein the coherency means are operable to inhibit the coherency operation if a conflict exists.

2. A memory cache control arrangement as claimed in claim 1 wherein the match criterion comprises an evaluation of whether a main memory address associated with the cache line belongs to the address group.

3. A memory cache control arrangement as claimed in claim 2 wherein the address group indication comprises a start address and an end address of a memory block of the main memory and the match criterion comprises determining if the main memory address belongs to the memory block.

4. A memory cache control arrangement as claimed in claim 3 wherein the start address and the end address are virtual memory addresses.

5. A memory cache control arrangement as claimed in any previous claim 2 to 4 wherein the match means is operable to determine the main memory address in response to a cache line tag and a cache line index.

6. A memory cache control arrangement as claimed in any previous claim wherein the memory cache (105) is a set-associative memory cache and the group of cache lines comprise cache lines of different sets of the set-associative memory.

7. A memory cache control arrangement as claimed in claim 6 wherein the processing means (303) is operable to process sets of the set-associative memory cache sequentially.

8. A memory cache control arrangement as claimed in any previous claim wherein the address group indication comprises an indication of at least one task identity and the match criterion comprises an evaluation of whether a task identity associated with the first cache line matches the at least one task identity.

9. A memory cache control arrangement as claimed claim 8 wherein the address group indication consists in a task identity.

10. A memory cache control arrangement as claimed in any previous claim wherein the group of cache lines comprise all cache lines of the memory cache.

11. A memory cache control arrangement as claimed in claim 1 wherein the conflict relates to a resource which is shared between the coherency operation and the other memory operation.

12. A memory cache control arrangement as claimed in claims 1 or 11 wherein the means for determining if a conflict exists is operable to determine that a conflict exists if the coherency operation and the other memory operation result in a substantially simultaneous access to the same cache resource.

13. A memory cache control arrangement as claimed in any of the claims 1, 11 or 12 wherein the coherency means are operable to inhibit the coherency operation by delaying one of the coherency operation and the other memory operation.

14. A memory cache control arrangement as claimed in any previous claim wherein the coherency operation is an invalidate operation.

15. A memory cache control arrangement as claimed in any previous claim wherein the coherency operation is a synchronisation operation.

16. A memory cache control arrangement as claimed in any previous claim wherein the coherency operation is a flush operation.

17. A memory cache control arrangement as claimed in any previous claim wherein the processing means (303) comprises means for setting a termination indication in response to determining that all cache lines of the group of cache lines have been processed.

18. A memory cache control arrangement as claimed claim 17 wherein the termination indication is an interrupt indication.

19. A memory cache control arrangement as claimed in any previous claim wherein the memory cache is an instruction cache.

20. A memory cache control arrangement as claimed in any previous claim wherein the memory cache is a data cache.

21. A memory cache system comprising a memory cache control arrangement as claimed in any of previous claims 1 to 19.

22. A processing system comprising:

a processor;
a main memory;
a cache memory coupled to the processor and the main memory; and
a memory cache control arrangement as claimed in any of previous claims 1 to 19.

23. A method of performing a coherency operation on a memory cache comprising the steps:

receiving an address group indication for an address group comprising a plurality of addresses associated with a main memory (103); and **characterized by** comprising the steps of:

sequentially processing each line of a group of cache lines; the processing comprising for each cache line of the group of cache lines performing the steps of:

determining if a first cache line is associated with an address of the address group by evaluating a match criterion, and
performing a coherency operation on the first cache line if the match criterion is met;
determining if a conflict exists between the coherency operation and another memory operation; and
inhibiting the coherency operation by the coherency means if a conflict exists.

**24.** A storage medium storing processor-implementable instructions for controlling a processor to carry out the method according to Claim 23.

**Patentansprüche**

**1.** Eine Speichercache-Steueranordnung zum Durchführen einer Koherenzoperation an einem Speichercache (105), die folgendes aufweist:

Mittel zum Empfangen (301) einer Adressgruppenangabe für eine Adressgruppe, die eine Vielzahl von mit einem Hauptspeicher (103) verbundenen Adressen umfasst;
**gekennzeichnet durch**:

Abarbeitungsmittel (303) zum sequentiellen Abarbeiten einer jeden Cachezeile aus einer Gruppe von Cachezeilen; wobei die Abarbeitungsmittel (303) folgendes umfassen:

Abgleichmittel zum Bestimmen, ob eine Cachezeile mit einer Adresse aus der Adressgruppe verbunden ist, **durch** Auswerten eines Abgleichkriteriums;
Kohärenzmittel zum Durchführen einer Kohärenzoperation an der Cachezeile, wenn das Abgleichkriterium erfüllt ist; und
Mittel zum Bestimmen, ob zwischen der Kohärenzoperation und einer anderen Speicheroperation ein Konflikt besteht, wobei die Kohärenzmittel derart betreibbar sind, dass sie bei Bestehen eines Konfliktes die Kohärenzoperation hemmen.

**2.** Eine Speichercache-Steueranordnung gemäß Anspruch 1, wobei das Abgleichkriterium eine Auswertung, ob eine mit der Cachezeile verbundene Hauptspeicheradresse zu der Adressgruppe gehört, umfasst.

**3.** Speichercache-Steueranordnung gemäß Anspruch 2, wobei die Adressgruppenangabe eine Anfangsadresse und eine Endadresse eines Speicherblocks des Hauptspeichers umfasst und das Abgleichkriterium ein Bestimmen, ob die Hauptspeicheradresse zu dem Speicherblock gehört, umfasst.

**4.** Speichercache-Steueranordnung gemäß Anspruch 3, wobei die Anfangsadresse und die Endadresse virtuelle Speicheradressen sind.

**5.** Speichercache-Steueranordnung gemäß einem der Ansprüche 2 bis 4, wobei die Abgleichmittel derart betreibbar sind, dass die Hauptspeicheradresse in Antwort auf eine Cachezeilenmarkierung und einen Cachezeilenindex bestimmt wird.

**6.** Speichercache-Steueranordnung gemäß einem der vorhergehenden Ansprüche, wobei der Speichercache (105) ein Set-assoziativer Speichercache ist und die Gruppe von Cachezeilen Cachezeilen verschiedener Sätze des Set-assoziativen Speichers umfasst.

**7.** Speichercache-Steueranordnung gemäß Anspruch 6, wobei die Abarbeitungsmittel (303) derart betreibbar sind, dass die Sätze des Set-assoziativen Speichercaches sequentiell abarbeiten.

**8.** Speichercache-Steueranordnung gemäß einem der vorhergehenden Ansprüche, wobei die Adressgruppenangabe eine Angabe mindestens einer Aufgabenidentität umfasst und wobei das Abgleichkriterium eine Auswertung, ob eine mit der ersten Cachezeile verbundene Aufgabenidentität mit der mindestens einen Aufgabenidentität übereinstimmt, umfasst.

**9.** Speichercache-Steueranordnung gemäß Anspruch 8, wobei die Adressgruppenangabe aus einer Aufgabenidentität besteht.

**10.** Speichercache-Steueranordnung gemäß einem der vorhergehenden Ansprüche, wobei die Gruppe von Cachezeilen alle Cachezeilen des Speichercaches umfasst.

**11.** Speichercache-Steueranordnung gemäß Anspruch 1, wobei der Konflikt eine Ressource betrifft, die unter der Kohärenzoperation und der anderen Speicheroperation geteilt wird.

**12.** Speichercache-Steueranordnung gemäß Anspruch 1 oder 11, wobei die Mittel zum Bestimmen, ob ein Konflikt besteht, derart betreibbar sind, dass bestimmt wird, dass ein Konflikt besteht, wenn die Kohärenzoperation und die andere Speicheroperation einen im Wesentlichen gleichzeitigen Zugang zu derselben Cacheressource zur Folge haben.

**13.** Speichercache-Steueranordnung gemäß einem der Ansprüche 1, 11 oder 12, wobei die Kohärenzmittel derart betreibbar sind, dass sie die Kohärenzoperation hemmen, indem sie entweder die Kohärenzoperation oder die andere Speicheroperation verzögern.

**14.** Speichercache-Steueranordnung gemäß einem der vorhergehenden Ansprüche, wobei die Kohärenzoperation eine Entwertungsoperation ist.

**15.** Speichercache-Steueranordnung gemäß einem der vorhergehenden Ansprüche, wobei die Kohärenzoperation eine Synchronisationsoperation ist.

**16.** Speichercache-Steueranordnung gemäß einem der vorhergehenden Ansprüche, wobei die Kohärenzoperation eine Leerungsoperation ist.

**17.** Speichercache-Steueranordnung gemäß einem der vorhergehenden Ansprüche, wobei die Abarbeitungsmittel (303) Mittel zum Setzen einer Beendigungsangabe in Antwort auf ein Bestimmen, dass alle Cachezeilen der Gruppe von Cachezeilen abgearbeitet worden sind, umfassen.

**18.** Speichercache-Steueranordnung gemäß Anspruch 17, wobei die Beendigungsangabe eine Unterbrechungsangabe ist.

**19.** Speichercache-Steueranordnung gemäß einem der vorhergehenden Ansprüche, wobei der Speichercache ein Befehlscache ist.

**20.** Speichercache-Steueranordnung gemäß einem der vorhergehenden Ansprüche, wobei der Speichercache ein Datencache ist.

**21.** Speichercachesystem, das eine Speichercache-Steueranordnung gemäß einem der vorgehenden Ansprüche 1 bis 19 umfasst.

**22.** Abarbeitungssystem, das folgendes umfasst:

> einen Prozessor;
> einen Hauptspeicher;
> einen Cachespeicher, der mit dem Prozessor und dem Hauptspeicher verbunden ist; und
> eine Speichercache-Steueranordnung gemäß einem der vorhergehenden Ansprüche 1 bis 19.

**23.** Verfahren zum Durchführen einer Kohärenzoperation an einem Speichercache, das die folgenden Schritte umfasst:

> Empfangen einer Adressgruppenangabe für eine Adressgruppe, die eine Vielzahl von mit einem Hauptspeicher (103) verbundenen Adressen umfasst; **dadurch gekennzeichnet, dass** es die folgenden Schritte umfasst:
>
>> Sequentielles Abarbeiten einer jeden Zeile einer Gruppe von Cachezeilen; wobei das Abarbeiten für jede Cachezeile aus der Gruppe von Cachezeilen das Durchführen der folgenden Schritte umfasst:
>>
>>> Bestimmen, ob eine erste Cachezeile mit einer Adresse der Adressgruppe verbunden ist, durch Auswerten eines Abgleichkriteriums, und
>>> Durchführen einer Kohärenzoperation an der ersten Cachezeile, wenn das Abgleichkriterium erfüllt ist;
>>> Bestimmen, ob zwischen der Kohärenzoperation und einer anderen Speicheroperation ein Konflikt besteht; und
>>> Hemmen der Kohärenzoperation durch die Kohärenzmittel, wenn ein Konflikt besteht.

**24.** Speichermedium, auf dem prozessorimplementierbare Befehle gespeichert sind, die geeignet sind, einen Prozessor derart zu steuern, dass er das Verfahren gemäß Anspruch 23 ausführt.

**Revendications**

1. Agencement de commande d'antémémoire destiné à effectuer une opération de cohérence sur une antémémoire (105) comprenant :

   un moyen (301) destiné à recevoir une indication de groupe d'adresses pour un groupe d'adresses comprenant une pluralité d'adresses associée à une mémoire principale (103) ;
   et **caractérisé par** un moyen (303) de traitement destiné à traiter séquentiellement chaque ligne d'antémémoire d'un groupe de lignes d'antémémoire ; le moyen (303) de traitement comprenant :

   un moyen de concordance destiné à déterminer, en évaluant un critère de concordance, si une ligne d'antémémoire est associée à une adresse du groupe d'adresses ;
   des moyens de cohérence destinés à effectuer une opération de cohérence sur la ligne d'antémémoire si le critère de concordance est satisfait ; et
   un moyen destiné à déterminer s'il existe un conflit entre l'opération de cohérence et une autre opération de mémoire et dans lequel les moyens de cohérence sont utilisables pour interdire l'opération de cohérence s'il existe un conflit.

2. Agencement de commande d'antémémoire selon la revendication 1, dans lequel le critère de concordance comprend une évaluation de ce qu'une adresse de mémoire associée à la ligne d'antémémoire appartient ou non au groupe d'adresses.

3. Agencement de commande d'antémémoire selon la revendication 2, dans lequel l'indication de groupe d'adresses comprend une adresse de début et une adresse de fin d'un bloc de mémoire de la mémoire principale et dans lequel le critère de concordance comprend la détermination de ce que l'adresse de mémoire principale appartient ou non au bloc de mémoire.

4. Agencement de commande d'antémémoire selon la revendication 3, dans lequel l'adresse de début et l'adresse de fin sont des adresses de mémoire virtuelle.

5. Agencement de commande d'antémémoire selon l'une quelconque des revendications 2 à 4 précédentes, dans lequel le moyen de concordance est utilisable pour déterminer l'adresse de mémoire principale en réponse à une étiquette de ligne d'antémémoire et à un index de ligne d'antémémoire.

6. Agencement de commande d'antémémoire selon l'une quelconque des revendications précédentes, dans lequel l'antémémoire (105) est une antémémoire à association d'ensembles de données et dans lequel le groupe de lignes d'antémémoire comprend des lignes d'antémémoire d'ensembles différents de la mémoire à association d'ensembles de données.

7. Agencement de commande d'antémémoire selon la revendication 6, dans lequel le moyen (303) de traitement est utilisable pour traiter séquentiellement des ensembles de l'antémémoire à association d'ensembles de données.

8. Agencement de commande d'antémémoire selon l'une quelconque des revendications précédentes, dans lequel l'indication de groupe d'adresses comprend une indication d'au moins une identité de tâche et dans lequel le critère de concordance comprend une évaluation de ce qu'une identité de tâche associée à la première ligne d'antémémoire concorde avec l'au moins une identité de tâche.

9. Agencement de commande d'antémémoire selon la revendication 8, dans lequel l'indication de groupe d'adresses consiste en une identité de tâche.

10. Agencement de commande d'antémémoire selon l'une quelconque des revendications précédentes, dans lequel le groupe de lignes d'antémémoire comprend toutes les lignes d'antémémoire de l'antémémoire.

11. Agencement de commande d'antémémoire selon la revendication 1, dans lequel le conflit se rapporte à une ressource qui est partagée entre l'opération de cohérence et l'autre opération de mémoire.

12. Agencement de commande d'antémémoire selon la revendication 1 ou 11, dans lequel le moyen destiné à déterminer s'il existe un conflit est utilisable pour déterminer qu'un conflit existe si l'opération de cohérence et l'autre opération de mémoire ont pour résultat un accès pratiquement simultané à la même ressource d'antémémoire.

**13.** Agencement de commande d'antémémoire selon l'une quelconque des revendications 1, 11 ou 12, dans lequel les moyens de cohérence sont utilisables pour interdire l'opération de cohérence en retardant l'une de l'opération de cohérence et de l'autre opération de mémoire.

**14.** Agencement de commande d'antémémoire selon l'une quelconque des revendications précédentes, dans lequel l'opération de cohérence est une opération d'invalidation.

**15.** Agencement de commande d'antémémoire selon l'une quelconque des revendications précédentes, dans lequel l'opération de cohérence est une opération de synchronisation.

**16.** Agencement de commande d'antémémoire selon l'une quelconque des revendications précédentes, dans lequel l'opération de cohérence est une opération de purge.

**17.** Agencement de commande d'antémémoire selon l'une quelconque des revendications précédentes, dans lequel le moyen (303) de traitement comprend un moyen destiné à fixer une indication de terminaison en réponse à la détermination de ce que toutes les lignes d'antémémoire du groupe de lignes d'antémémoire ont été traitées.

**18.** Agencement de commande d'antémémoire selon la revendication 17, dans lequel l'indication de terminaison est une indication d'interruption.

**19.** Agencement de commande d'antémémoire selon l'une quelconque des revendications précédentes, dans lequel l'antémémoire est une antémémoire d'instructions.

**20.** Agencement de commande d'antémémoire selon l'une quelconque des revendications précédentes, dans lequel l'antémémoire est une antémémoire de données.

**21.** Système d'antémémoire comprenant un agencement de commande d'antémémoire selon l'une quelconque des revendications 1 à 19.

**22.** Système de traitement comprenant :

un processeur ;
une mémoire principale ;
une antémémoire associée au processeur et à la mémoire principale ; et
un agencement de commande d'antémémoire selon l'une quelconque des revendications 1 à 19 précédentes.

**23.** Procédé d'exécution d'une opération de cohérence sur une antémémoire comprenant les étapes :

de réception d'une indication de groupe d'adresses pour un groupe d'adresses comprenant une pluralité d'adresses associée à une mémoire principale (103) ;
et **caractérisé en ce qu'**il comprend les étapes consistant à traiter séquentiellement chaque ligne d'un groupe de lignes d'antémémoire ; le traitement comprenant pour chaque ligne d'antémémoire du groupe de lignes d'antémémoire l'exécution des étapes consistant :

à déterminer, en évaluant un critère de concordance, si une première ligne d'antémémoire est associée à une adresse du groupe d'adresses ; et
à effectuer une opération de cohérence sur la première ligne d'antémémoire si le critère de concordance est satisfait ;
à déterminer s'il existe un conflit entre l'opération de cohérence et une autre opération de mémoire ; et
à interdire l'opération de cohérence par les moyens de cohérence s'il existe un conflit.

**24.** Support de mémorisation mémorisant des instructions exécutables par processeur pour commander un processeur pour mettre en oeuvre le procédé selon la revendication 23.

**FIG. 1**

**FIG. 2**

EP 1 605 360 B1

CACHE
MEMORY
107

303
CACHE
CONTROLLER

105

301
RECEIVE
PROCESSOR

103
MAIN
MEMORY

305
TAG
ARRAY

CACHE MEMORY SYSTEM

## FIG. 3

| | |
|---|---|
| TAG (0,0) | TASK ID (0,0) |
| TAG (0,1) | TASK ID (0,1) |
| TAG (0,2) | TASK ID (0,2) |
| TAG (0,3) | TASK ID (0,3) |

409
411
413  401
SET 0

| | |
|---|---|
| TAG (1,0) | TASK ID (1,0) |
| TAG (1,1) | TASK ID (1,1) |
| TAG (1,2) | TASK ID (1,2) |
| TAG (1,3) | TASK ID (1,3) |

415
417  403
SET 1

| | |
|---|---|
| TAG (2,0) | TASK ID (2,0) |
| TAG (2,1) | TASK ID (2,1) |
| TAG (2,2) | TASK ID (2,2) |
| TAG (2,3) | TASK ID (2,3) |

419
421  405
SET 2

| | |
|---|---|
| TAG (0,0) | TASK ID (0,0) |
| TAG (3,1) | TASK ID (3,1) |
| TAG (3,2) | TASK ID (3,2) |
| TAG (3,3) | TASK ID (3,3) |

423
425  407
SET 3

## FIG. 4    400

SET
START ADDRESS
END ADDRESS
TASK ID — *501*

↓

RESET LINE POINTER — *503*

↓

EXTRACT TAG AND TASK ID
FROM TAG ARRAY — *505*

↓

MATCH? — *507*  NO →

YES ↓

OPERATION
PERMITTED? — *509*  NO →

YES ↓

PERFORM COHERENCY OPERATION — *511*

↓

REACHED
LAST LINE IN
CACHE? — *513*  YES →

NO ↓

POINT TO NEXT LINE — *517*

END OF OPERATION — *515*

*500*

# FIG. 5

## REFERENCES CITED IN THE DESCRIPTION

### Patent documents cited in the description

- EP 1182566 A1